# EUROPÄISCHE PATENTSCHRIFT

(11) **EP 3 906 438 B1**
(45) Veröffentlichungstag und Bekanntmachung des Hinweises auf die Patenterteilung: **12.04.2023**
(21) Anmeldenummer: 20713171.5
(22) Anmeldetag: 20.02.2020
(51) Int. Cl.: G02C 1/04, G02C 1/00

(54) **BRILLE**
SPECTACLES
LUNETTES

(30) Priorität: 06.03.2019 DE 102019203035
(43) Veröffentlichungstag der Anmeldung: 10.11.2021
(73) Patentinhaber: VISI Management GmbH, 73540 Heubach (DE)
(72) Erfinder: BECK, Volker, 73527 Schwäbisch Gmünd (DE)
(74) Vertreter: Dr. Weitzel & Partner
(86) Internationale Anmeldenummer: PCT/EP2020/054417
(87) Internationale Veröffentlichungsnummer: WO 2020/178029

(56) Entgegenhaltungen:
- DE-C- 810 437
- US-A- 3 917 387
- US-A- 5 914 768

## Beschreibung

Die Erfindung betrifft eine Brille gemäß dem Oberbegriff von Anspruch 1. Die Brille zeichnet sich durch geringes Gewicht sowie durch besonders ansprechendes Aussehen aus.

Wie man weiß, haben Brillen nicht nur eine rationale Funktion zum Beispiel zum besseren Sehen oder als Schutz gegen Sonnenstrahlen. Vielmehr sind sie ein Modeartikel, weltweit geschätzt von einer Vielzahl von Menschen aller Bevölkerungsschichten.

Man kann zwischen zwei Brillentypen unterscheiden, zum einen die schwergewichtige, grobschlächtige, vorwiegend dunkelfarbene Kunststoff- oder Hornbrille, und zum anderen die extrem leichte Brille mit einem Metallrahmen aus hochfesten und daher dünnen Materialien wie Titan, wobei der Rahmen eine möglichst zurückhaltende Rolle spielt, sodass er als solcher gar nicht erkannt wird.

Bei der vorliegenden Erfindung geht es um die zweitgenannte Kategorie. Dabei tritt der Rahmen möglichst überhaupt nicht in Erscheinung. Er ist so sparsam wie möglich gestaltet und erstreckt sich außer den Bügeln, die an den Schläfen anliegen oder mit einer Rundung über die Ohren hinweggehen, nur aus dünnen, leichten Rahmenteilen, die sich an der Oberkante der beiden Gläser entlang erstrecken. Dabei werden Nylonfäden verwendet, die den unteren Bereich des einzelnen Glases umgeben und hierbei in eine Nut eingelegt sind, die in den Rand des Glases eingeschliffen ist. Solche Kunststofffäden, meist aus Nylon, dienen dazu, das Glas einzuspannen zwischen einem Rahmenteil, der sich an der oberen Glaskante entlang erstreckt sowie dem genannten Kunststofffaden. Der Kunststofffaden hat somit eine tragende und damit wichtige Funktion für die Stabilität der gesamten Brille.

Die Brille kann auch so konstruiert sein, dass der Metallrahmen an der Unterkante und der Nylonfaden an der Oberkante der Gläser verläuft.

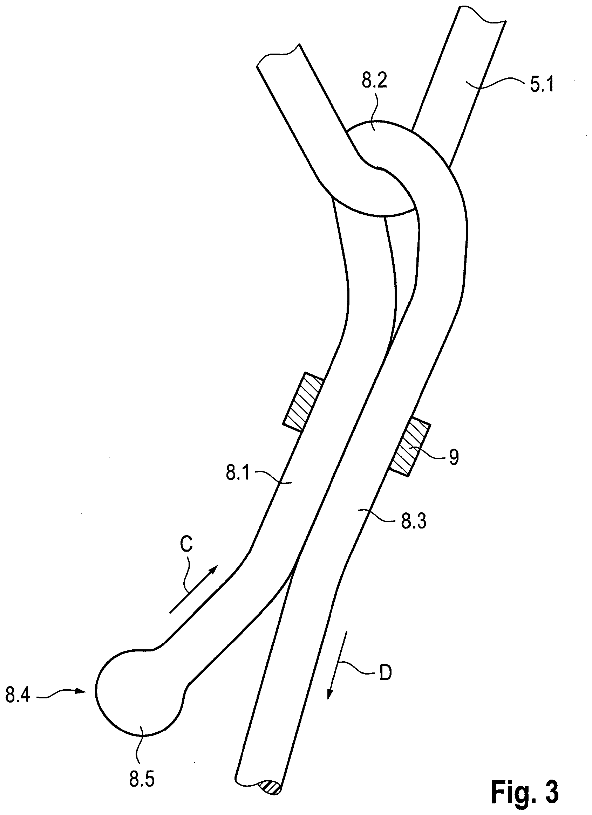

Der Kunststofffaden tritt dort nicht in Erscheinung, wo er, wie oben erwähnt, in einer Nut liegt, die in den Randbereich des Glases eingeschliffen ist. Schwierig ist jedoch das zuverlässige und zugleich unauffällige Fixieren von Kunststofffaden und Metallrahmen. Ein solches Fixieren ist in CN 206224069 dargestellt. Dabei ist eine Scheibe vorgesehen, die zwei Bohrungen aufweist. Ein Kunststofffaden, der eine Schlaufe bildet, ist durch die beiden Bohrungen der Scheibe hindurchgeführt. Siehe dort Figur 3. Dabei ist aus dem Kunststofffaden eine Schlaufe gebildet, die ein Teil des Metallrahmens umschlingt. Wie man weiß, umfasst eine solche Schlaufe einen gekrümmten Abschnitt sowie vor der Schlaufe und nach der Schlaufe jeweils einen sich längs erstreckenden Abschnitt; die beiden Längsabschnitte verlaufen parallel zueinander.

Bei der genannten Patentschrift ist der Schlaufe eine Scheibe mit zwei Bohrungen zugeordnet. Durch die eine Bohrung verläuft der eine Längsabschnitt des Fadens, und durch die andere Bohrung der andere Längsabschnitt.

Die Lösung ist ungünstig, weil die Schlaufe durch Verkanten des Fadens in der zweigelochten Scheibe nur schwer wieder gelockert werden kann.

DE 696 11 045 T2 beschreibt eine Brille mit zwei Gläsern, einem Rahmen sowie angelenkten Bügeln. Jedem Glas ist ein Kunststofffaden zugeordnet, der einen Teil des Umfanges des Glases umschlingt und dabei am Glasrand anliegt.

US 5914768 A, US 2001/0017686 A1 sowie JP H11-044865 A beschreiben jeweils Brillen mit Rahmenteil, Nasensteg, Scharnier, Bügel, Kunststofffaden. Diese bekannten Ausführungsformen haben Nachteile. Diese liegen zum Beispiel in einer relativ schwierigen Montage der Kunststofffäden und der Gläser oder darin, dass die Spannung der die Gläser umschlingenden Fäden nicht frei wählbar ist, oder dass nicht Gläser unterschiedlicher Durchmesser frei wählbar sind.

Weitere Druckschriften sind DE 810 437 sowie US 3 917 387.

Der Erfindung liegt die Aufgabe zugrunde, eine Brille gemäß dem Oberbegriff von Anspruch 1 derart zu gestalten, dass der betreffende Kunststofffaden, der jeweils eines der Gläser umschlingt, bei frei wählbarer Spannung fixiert und auch wieder gelöst werden kann und außerdem zur Anwendung bei Gläsern unterschiedlicher Durchmesser verwendbar ist.

Diese Aufgabe wird durch die Merkmale von Anspruch 1 gelöst.

Die Unterschiede zu der Ausführungsform gemäß der genannten CN-Schrift sind die Folgenden:
Bei der Erfindung ist eine Hülse vorgesehen, die als solche nur eine einzige Bohrung aufweist. Die beiden zur Schlaufenbildung verwendeten Längenabschnitte des Kunststofffadens liegen in der Bohrung der Hülse berührend aneinander. Zum Spannen des Kunststofffadens wird die Hülse derart verschoben, dass sich die Schlaufe zuzieht. Gleichzeitig lässt sich die Länge des Fadens präzise verändern, und zwar insbesondere verringern. Das Verringern der Fadenlänge bedeutet aber zugleich ein Spannen des Fadens und damit ein entsprechend starkes Andrücken des Glases im Sinne einer Stabilisierung der gesamten Brille. Auch kann der Faden bei Bedarf auf einfache Weise ausgetauscht werden, im Gegensatz zur genannten CN-Schrift.

Weiterhin bewirkt das enge Umschließen des Fadens durch die Hülse, dass die durch Verschieben der Hülse eingestellte Position relativ zum Faden unverändert bleibt, weil nämlich durch die Reibung zufolge des engen Anliegens ein Verschieben von Hülse relativ zum Faden unterbunden bleibt.

Wiederum im Gegensatz zu der genannten CN-Schrift ist die Anschlussstelle von Fadenendbereich an das Rahmenteil besser zentriert, sodass eine verbesserte Funktionalität und eine unauffällige Erscheinung erreicht werden.

Ein ganz wesentlicher Teil der Erfindung besteht darin, dass weder die Gläser noch der Rahmen mit Bohrungen versehen werden müssen, um Teile der Brille miteinander zu verschrauben oder einen Nylonfaden in der Bohrung zu fixieren.

Der Stand der Technik sowie die erfindungsgemäße Brille sind anhand der Zeichnung näher erläutert. Darin ist im Einzelnen Folgendes dargestellt:
- Figur 1: zeigt eine bekannte Brille in perspektivischer Darstellung.
- Figur 2: zeigt eine Brille gemäß der Erfindung, wiederum in perspektivischer Darstellung.
- Figur 3: zeigt in vergrößerter Darstellung die Bauteile im Bereich der Anschlussstelle zwischen einem Kunststofffaden und einem Rahmenteil.
- Figur 4a: zeigt in perspektivischer Darstellung die Hülse gemäß Figur 3.
- Figur 4b: zeigt den Gegenstand von Figur 4a in einem Schnitt senkrecht zur Längsachse der Hülse.
- Figur 5: zeigt einen Gegenstand analog zu jenem gemäß der Figuren 4a und 4b mit einer Hülse, deren Längserstreckung gering ist, sodass sie einen gelochten Ring darstellt.

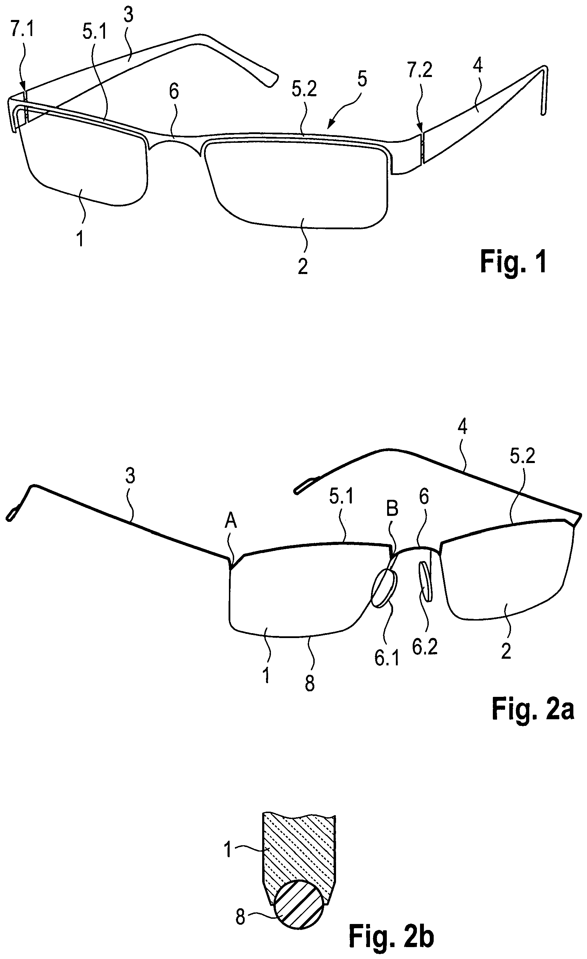

Die in Figur 1 gezeigte, bekannte Ausführungsform einer Brille umfasst zwei Gläser 1, 2. Die Gläser sind von einem Rahmen getragen, der die folgenden Bauteile umfasst:
Zwei Bügel 3, 4, ein Tragteil 5, umfassend einen ersten Abschnitt 5.1, der sich über die Oberkante von Glas 1 erstreckt sowie einen zweiten Abschnitt 5.2, der sich über die Oberkante von Glas 2 erstreckt. Die Abschnitte 5.1 und 5.2 sind einteilig mit einem sich zwischen diesen befindlichen Nasensteg 6. Die beiden Bügel 3, 4 sind jeweils über ein Scharnier 7.1, 7.2 an die Abschnitte 5.1 und 5.2 des Rahmens 5 angeschlossen.

Die in Figur 2 gezeigte erfindungsgemäße Brille ist schematisch dargestellt. Sie ist in einer sehr leichten Bauweise ausgeführt. Der Rahmen kann im Wesentlichen so ausgeführt sein, wie jener gemäß Figur 1. Jedoch sind die Bauteile 3, 4, 5.1, 5.2 und 6 aus Draht hergestellt, beispielsweise aus einem Titandraht. Am Nasensteg 6 befinden sich Nasenplättchen 6.1, 6.2.

Das Besondere an der Brille gemäß Figur 2 ist ein Faden 8 aus Kunststoff. Dieser ist um wenigstens einen Teil des Umfanges eines jeden Glases herumgeführt. Dabei kann er in eine Nut des Glasrandes eingelegt sein. Siehe die vergrößerte Schnittansicht von Figur 2b.

Faden 8 kann das betreffende Glas auf dessen gesamtem Umfang umschlingen, somit beginnend bei der Stelle A und auch wieder endend an der Stelle A. Faden 8 kann aber auch nur einen Teil des Glases umschlingen, beispielsweise beginnend an der Stelle A und endend an der Stelle B. Es versteht sich, dass dies bei beiden Gläsern 1 und 2 in gleicher Weise ausgeführt ist.

Figur 3 zeigt die entscheidenden Einzelheiter der Erfindung. Man erkennt wiederum den Kunststofffaden 8, und zwar einen Endabschnitt hiervon. Dieser Endabschnitt ist zu einer Schlaufe geformt, umfassend einen Längenabschnitt 8.1, einen gekrümmten Abschnitt 8.2 sowie einen zweiten Längenabschnitt 8.3. Man könnte auch sagen, dass der Endabschnitt des Fadens 8 eine haarnadelförmige Gestalt hat. Das Ende 8.4 des Fadens 8 befindet sich am ersten Längenabschnitt 8.1. Hier ist durch Anschmelzen ein Pfropfen 8.5 entstanden, die einen größeren Durchmesser als Faden 8 auf seiner übrigen Erstreckung aufweist.

Wie man sieht, umschlingt die Schlaufe des Fadens 8 ein Rahmenteil, zum Beispiel Rahmenteil 5.1 beziehungsweise 5.2. Die Umschlingung beginnt an der Anschlussstelle A des betreffenden Rahmenteiles. Sie läuft sodann - in Figur a gesehen im Gegenzeigersinn - um Glas 1 herum bis zur Anschlussstelle B. Hier wird aus dem zweiten Fadenende wiederum eine Schlaufe geformt, siehe oben, analog zu der in Figur 3 gezeigten Schlaufe.

Das Anschließen des Fadens an ein Rahmenteil mittels einer Schlaufe ist bekannt. Schwierig ist dabei das Fixieren der Schlaufe. Die Schlaufe soll während des Montierens nicht aufgehen, und sich natürlich auch nicht nach dem Montieren selbstständig lösen. Die Erfindung verhindert dies. Hierzu ist maßgeblich eine Hülse 9 vorgesehen, deren Wirkung nachstehend beschrieben wird. Die Montage des Kunststofffadens 8 am Metallrahmenteil 5.1 verläuft wie folgt:
Zunächst wird das Ende 8.4 des Fadens 8 durch die Bohrung der Hülse 9 hindurchgeführt. Das Ende 8.4 des Fadens 8 ist dabei noch nicht angeschmolzen, sodass es auch nicht die in Figur 3 gezeigten Pfropfen aufweist. Sodann wird das Ende 8.4 von Faden 8 um Rahmenteil 5.1 herumgeführt, wobei die in Figur 3 gezeigte Schlaufe entsteht. Längenabschnitt 8.1 des Fadens 8 wird sodann weitergeführt, und zwar durch die Hülse 9 hindurch. Die lichte Weite von Hülse 9 ist derart bemessen, dass die beiden Längenabschnitte 8.1 und 8.3 von Hülse 9 eng umschlossen sind und auch eng aneinander anliegen. Wie man sieht, verlaufen beide Längenabschnitte 8.1 und 8.3 ein Stück Wegs parallel zueinander.

Jetzt geht es um das Festzurren der Schlaufe. Dies kann dadurch geschehen, dass die Hülse 9 auf den Längenabschnitten 8.1 und 8.3 sitzend gegen Metallrahmenteil 5.1 verschoben wird. Es können aber auch gleichzeitig die Längenabschnitte 8.1 und 8.3 relativ zueinander verschoben werden, womit sich die zur Umschlingung von Glas 1 verfügbare Länge des Fadens verändert. Findet die genannte Relativbewegung der Längenabschnitte 8.1 und 8.3 gemäß der Pfeile C und D statt, so steht eine größere Länge zum Umschlingen von Glas 1 zur Verfügung. Man erkennt, dass damit auch die Spannung im Faden 8 bei dessen Umschlingen des Glases 1 verändert werden kann. Die Spannung soll möglichst groß sein, sodass ein Anpressen von Glas 1 mittels des Fadens 8 gegen das Metallrahmenteil 5.1 vergrößert wird. Ist die Spannung groß genug, so bedeutet dies, dass das Glas zwischen dem Faden 8 und dem betreffenden Metallrahmenteil 5.1 eingespannt wird. Hiermit ergibt sich eine sehr stabile Konstruktion. Die Verbindung zwischen dem Glas beziehungsweise den Gläsern und dem Rahmen wird erzielt ohne ein Verschrauben. Es entfällt somit ein Bearbeiten des Glases, zum Beispiel durch Anbringen von Bohrungen oder durch Schraubverbindungen. Beim Montieren sorgt die enge Verbindung zwischen Hülse 9 und den beiden Längenabschnitten 8.1 und 8.3 durch die mechanische Reibung zwischen den genannten Bauteilen dafür, dass die Schlaufe während des Montierens nicht aufgeht.

Der genannte Pfropfen 8.5 kann nach dem Hindurchführen des Endes 8.4 durch die Hülse 9 hindurch angeschmolzen werden. Die Verdichtung 9 dient als zusätzliche Sicherheit gegen Lösen der Schlaufenkonstruktion. Der Pfropfen 8.5 verhindert ein Herausrutschen des Fadens 8 aus der Hülse 9.

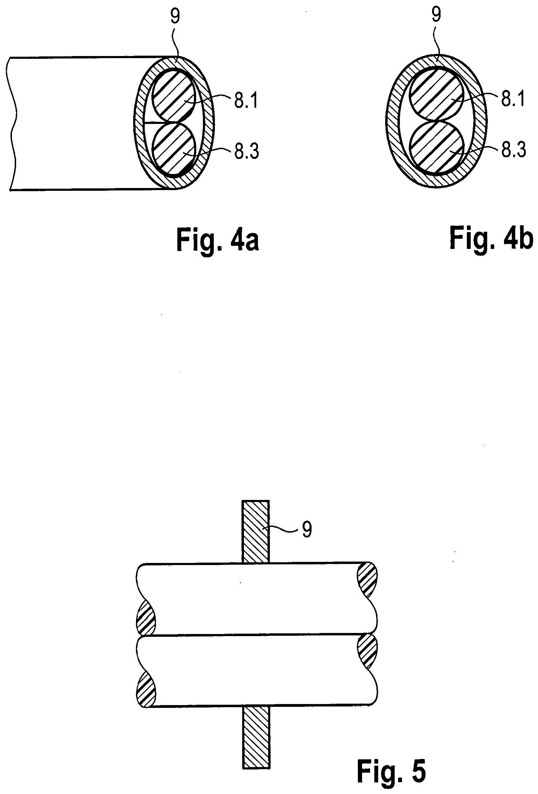

Die Figuren 4a und 4b veranschaulichen schematisch die Längenabschnitte 8.1 und 8.3 innerhalb der Hülse 9. Wie man aus Figur 4b erkennt, hat die Hülse 9 eine im Querschnitt ovale Bohrung, die nahezu vollständig von den Querschnitten der Längenabschnitte 8.1 und 8.3 ausgefüllt ist.

Figur 5 zeigt wiederum die beiden Längenabschnitte 8.1 und 8.3. Hülse 9 ist in diesem Falle von geringer axialer Erstreckung; sie ist nämlich im vorliegenden Falle eine gelochte Scheibe oder ein Ring.

Der Faden muss nicht unbedingt einen runden Querschnitt haben. Auch kann er hohl sein, somit als Schlauch ausgebildet.

Wie oben beschrieben, nimmt der Kunststofffaden an einer ersten Stelle des Glasumfanges seinen Anfang, beispielsweise im Bereich des betreffenden Bügels, und wird an einer zweiten Anschlussstelle, im Allgemeinen im Bereich des Nasensteges, am Metallrahmenteil fixiert. Es ist jedoch auch denkbar, dass die beiden Anschlussstellen A und B zusammenfallen. In diesem Falle läuft der Kunststofffaden um den gesamten Umfang des betreffenden Glases herum.

### Bezugszeichenliste

- 1: Glas
- 2: Glas
- 3: Bügel
- 4: Bügel
- 5: Rahmen
- 5.1: Rahmenteil
- 5.2: Rahmenteil
- 6: Nasensteg
- 6.1: Nasenplättchen
- 6.2: Nasenplättchen
- 7.1: Scharnier
- 7.2: Scharnier
- 8: Kunststofffaden
- 8.1: Längenabschnitt
- 8.2: Krümmer
- 8.3: Längenabschnitt
- 8.4: Ende
- 8.5: Pfropfen

## Patentansprüche

1. Brille mit den folgenden Merkmalen:
1.1 zwei Gläser (1, 2);
1.2 einen starren oder flexiblen Rahmen (5), umfassend einen sich am oberen oder unteren Glasrand eines jeden Glases erstreckenden Rahmenteil (5.1, 5.2) sowie mit einem zwischen den beiden Rahmenteilen (5.1, 5.2) befindlichen Nasensteg (6), einen an jedem Ende des Rahmens (5) mittels eines Scharniers (7.1, 7.2) angelenkten Bügel (3, 4);
1.3 jedem Glas (1, 2) ist ein Kunststofffaden (8) zugeordnet, der wenigstens einen Teil des Umfanges des betreffenden Glases (1, 2) umschlingt und dabei am Glasrand anliegt;
1.4 jedes Ende des betreffenden Kunststofffadens ist an den Rahmen angeschlossen;
1.5 jede Anschlussstelle ist wie folgt gestaltet:
das Ende des einzelnen Kunststofffadens (8) bildet eine Schlaufe, die ein Rahmenteil (5.1, 5.2) umschlingt;
die beiden die Schlaufen bildenden, zueinander parallel verlaufenden Längenabschnitte (8.1, 8.3) des Endabschnittes sind gemeinsam durch die einzige Längsbohrung einer Hülse (9) hindurchgeführt, und dabei von der Hülse (9) umschlossen;
**gekennzeichnet durch** die folgenden Merkmale:
1.6 die Hülse (9) umschließt die beiden Längenabschnitte (8.1, 8.3) derart eng, dass die eingestellte Position der Hülse relativ zum Kunststofffaden unverändert bleibt, wobei durch die Reibung zufolge des engen Anliegens ein selbstständiges Verschieben der Hülse unterbunden bleibt, aber die Spannung der die Gläser umschlingenden Fäden durch Verschiebung der Längenabschnitte relativ zueinander und/oder durch Verschiebung der Hülse auf den Längenabschnitten frei wählbar ist.

2. Brille nach Anspruch 1, **dadurch gekennzeichnet, dass** das Ende des einen Längenabschnittes (8.1) einen Pfropfen (8.5) umfasst, die ein Herausziehen des Längenabschnittes (8.1) durch die Bohrung der Hülse (9) verhindert.

3. Brille nach Anspruch 2, **dadurch gekennzeichnet, dass** der Pfropfen (8.5) durch Anschmelzen des Endes des Kunststofffadens (8) erzeugt ist.

4. Brille nach einem der Ansprüche 1 bis 3, **dadurch gekennzeichnet, dass** der Kunststofffaden (8) aus Nylon oder Perlon besteht.

5. Brille nach einem der Ansprüche 1 bis 4, **gekennzeichnet durch** die folgenden Merkmale:
eine Anschlussstelle (A) des Kunststofffadens (8) am Rahmen (5) befindet sich im Bereich des Scharniers (7.1, 7.2), und die andere Anschlussstelle (B) befindet sich am Nasensteg (6).

6. Brille nach einem der Ansprüche 1 bis 5, **dadurch gekennzeichnet, dass** das Material des Rahmens (5) Metall oder Kunststoff ist.

## Claims

1. Spectacles, having the following characteristics:
1.1 two lenses (1, 2);
1.2 a rigid or flexible frame (5) having a frame part (5.1, 5.2) extending at the upper or lower lens edge of each lens and having a nose bridge (6) located between the two frame parts (5.1, 5.2), a temple (3, 4) hinged at each end of the frame (5) by means of a hinge (7.1, 7.2);
1.3 associated with each lens (1, 2) is a plastic thread (8) which wraps around at least part of the periphery of the respective lens (1, 2), while resting against the lens edge;
1.4 each end of the respective plastic thread is connected to the frame;
1.5 each connection point is shaped as follows:
the end of the single plastic thread (8) forms a loop which wraps around a frame part (5.1, 5.2);
the two longitudinal sections (8.1, 8.3) of the end section forming the loops and extending parallel to one another are passed together through the single longitudinal bore of a sleeve (9), and are thereby enclosed by the sleeve (9);
**characterized by** the following features:
1.6 the sleeve (9) tightly encloses the two length sections (8.1, 8.3) in such a way that the adjusted position of the sleeve relative to the plastic thread remains unchanged, wherein an independent displacement of the sleeve remains prevented by the friction due to the tight fit, but the tension of the threads wrapping around the lenses can be freely selected by displacing the length sections relative to each other and/or by displacing the sleeve on the length sections.

2. Spectacles according to claim 1, **characterized in that** the end of the one length section (8.1) comprises a plug (8.5) which prevents the length section (8.1) from being pulled out through the bore of the sleeve (9).

3. Spectacles according to claim 2, **characterized in that** the plug (8.5) is produced by melting the end of the plastic thread (8).

4. Spectacles according to one of claims 1 to 3, **characterized in that** the plastic thread (8) is made of nylon or perlon.

5. Spectacles according to one of claims 1 to 4, **characterized by** the following features:
one connection point (A) of the plastic thread (8) on the frame (5) is located in the region of the hinge (7.1, 7.2), and the other connection point (B) is located on the nose bridge (6).

6. Spectacles according to one of claims 1 to 5, **characterized in that** the material of the frame (5) is metal or plastic.

## Revendications

1. Lunettes possédant les caractéristiques suivantes :
1.1 deux verres (1, 2) ;
1.2 une monture rigide ou flexible (5), comprenant une partie de monture (5.1, 5.2) s'étendant sur le bord supérieur ou inférieur du verre de chaque verre, ainsi qu'avec un pont de nez (6) situé entre les deux parties de monture (5.1, 5.2), une branche (3, 4) articulée à chaque extrémité de la monture (5) au moyen d'une charnière (7.1, 7.2) ;
1.3 à chaque verre (1, 2) est associé un fil en matière plastique (8) qui enlace au moins une partie de la périphérie du verre (1, 2) concerné en étant en contact avec le bord de verre ;
1.4 chaque extrémité du fil en matière plastique concerné est raccordée à la monture ;
1.5 chaque point de raccordement est conçu comme suit : l'extrémité du fil en matière plastique individuel (8) forme une boucle qui enlace une partie de monture (5.1, 5.2) ;
les deux sections longitudinales (8.1, 8.3) de la section d'extrémité qui forment les boucles et s'étendent parallèlement l'une à l'autre traversent ensemble l'unique perçage longitudinal d'une douille (9), et sont ainsi enserrées par la douille (9) ;
**caractérisées en ce que** :
la douille (9) enserre étroitement les deux sections longitudinales (8.1, 8.3) de telle sorte que la position réglée de la douille par rapport au fil en matière plastique reste inchangée, un déplacement spontané de la douille étant empêché par le frottement dû au contact étroit, mais la tension des fils enlaçant les verres pouvant être choisie librement par déplacement des sections longitudinales l'une par rapport à l'autre et/ou par déplacement de la douille sur les sections longitudinales.

2. Lunettes selon la revendication 1, **caractérisées en ce que** l'extrémité de l'une des sections longitudinales (8.1) comprend un bouchon (8.5) qui empêche une extraction de la section longitudinale (8.1) à travers le perçage de la douille (9).

3. Lunettes selon la revendication 2, **caractérisées en ce que** le bouchon (8.5) est produit par fusion de l'extrémité du fil en matière plastique (8).

4. Lunettes selon l'une des revendications 1 à 3, **caractérisées en ce que** le fil en matière plastique (8) est en nylon ou en perlon.

5. Lunettes selon l'une des revendications 1 à 4, **caractérisées en ce que** : un point de raccordement (A) du fil en matière plastique (8) à la monture (5) se trouve au niveau de la charnière (7.1, 7.2), et l'autre point de raccordement (B) se trouve sur le pont de nez (6).

6. Lunettes selon l'une des revendications 1 à 5, **caractérisées en ce que** le matériau de la monture (5) est du métal ou du plastique.
